# EUROPÄISCHE PATENTSCHRIFT

(11) **EP 1 054 241 B1**
(45) Veröffentlichungstag und Bekanntmachung des Hinweises auf die Patenterteilung: **15.04.2009**
(21) Anmeldenummer: 00104037.7
(22) Anmeldetag: 26.02.2000
(51) Int. Cl.: G01F 23/72

(54) **Füllstandssonde mit geringem Totraum**
Level probe with minimal dead volume
Sonde de niveau à volume inutilisé minimal

(30) Priorität: 20.05.1999 CH 94599
(43) Veröffentlichungstag der Anmeldung: 22.11.2000
(73) Patentinhaber: Weka AG, CH-8344 Bäretswil (CH)
(72) Erfinder: Otto, Stefan, 8344 Bäretswil (CH)
(74) Vertreter: Blum, Rudolf Emil

(56) Entgegenhaltungen:
- US-A- 3 678 750

## Beschreibung

Die Erfindung betrifft eine Füllstandssonde mit einem entlang eines Führungsrohres beweglichen Schwimmer, der ein Magnetfeld erzeugt, welches auf eine Reihe von im Führungsrohr befindlichen magnetischen Fühlern wirkt, die über eine elektrische Schaltung die Lage des Schwimmers entlang dem Rohr anzeigen. Solche Sonden sind bekannt und als Fühler werden oft Reedkontakte verwendet, die in gestaffelter Weise im Rohr angeordnet sind. Das vom Schwimmer erzeugte Magnetfeld schaltet dann ein oder mehrere auf seiner Höhe befindliche Reedkontakte, die ihrerseits eine elektrische Schaltung zur Anzeige der Höhe des Schwimmers steuern. Die von den Reedkontakten zur Schaltung gehenden elektrischen Leiter kommen an einem, in beliebiger Höhe im Tank befestigten Ende des Führungsrohres aus diesem heraus und werden in einem flüssigkeitsdichten Durchgang oder Schlauch aus dem Tank herausgeführt. Von diesem einen Ende an steht das Führungsrohr frei, damit der Schwimmer unbehindert am Rohr entlang gleiten kann. Bei manchen Anlagen, die grossen Beschleunigungen standhalten können sollen, muss das andere, geschlossene Ende des Führungsrohres sicher, aber gleichzeitig auch leicht montier- und demontierbar an der Decke oder am Boden eines Flüssigkeitstankes gehalten werden. In bekannten Ausführungen geschieht dies z.B. mittels einem an der Decke des Tankes befestigten Bügel, der ein Loch aufweist, welches das geschlossene Ende des Führungsrohres aufnimmt. Es ragt dann der Bügel notwendigerweise eine gewisse Distanz von der Decke weg, sowohl aus konstruktiven Gründen, wie weil oft aus Gründen der Betriebssicherheit verlangt wird, dass eine bestimmte Länge des Rohres in der Halterung steckt, um sich auch bei grossen Beschleunigungen und entsprechender Verformung des Tankes nicht aus dieser befreien zu können. Als Folge davon stösst der Schwimmer an den Bügel, bevor er das Ende des Rohres erreicht hat, und kann das Flüssigkeitsniveau oberhalb einer gewissen, bis zu 10 cm unterhalb der Tankdecke liegenden Grenze nicht mehr anzeigen. Entsprechendes gilt mit umgekehrten Vorzeichen für die Befestigung des geschlossenen Führungsrohres am Boden des Tankes, wo bei einer Halterung mittels eines Bügels keine Anzeige der manchmal wichtigen, letzten Flüssigkeitsmenge im Tank möglich ist. In beiden Fällen kann das Anbringen eines oben oder unten über die Tankdecke, respektive unter dessen Boden, hervorragenden Domes den nötigen Raum schaffen, um den Schwimmer bis in die gewünschte Endlage gleiten zu lassen. Dies verlangt jedoch einen Platz ausserhalb des Tankes, der in manchen Anwendungen nicht, oder nur mit grossem Aufwand geschaffen werden kann. Hier will die Erfindung Abhilfe schaffen.

Zu diesem Zweck ist die Erfindung wie im Hauptanspruch beschrieben definiert.

Die Erfindung schafft auf einfache Weise eine zuverlässige Halterung in die das Führungsrohr leicht hineingesteckt und aus der es für eine Demontage leicht herausgezogen werden kann. Gleichzeitig erlaubt sie es dem Schwimmer praktisch bis an die entsprechende Wandung des Tankes zu gleiten und dabei die äussersten, am Ende des Führungsrohres befindlichen magnetischen Fühler zu betätigen. Dies ermöglicht eine genaue Anzeige des Flüssigkeitsniveaus auch bei fast vollem oder fast leerem Tank.

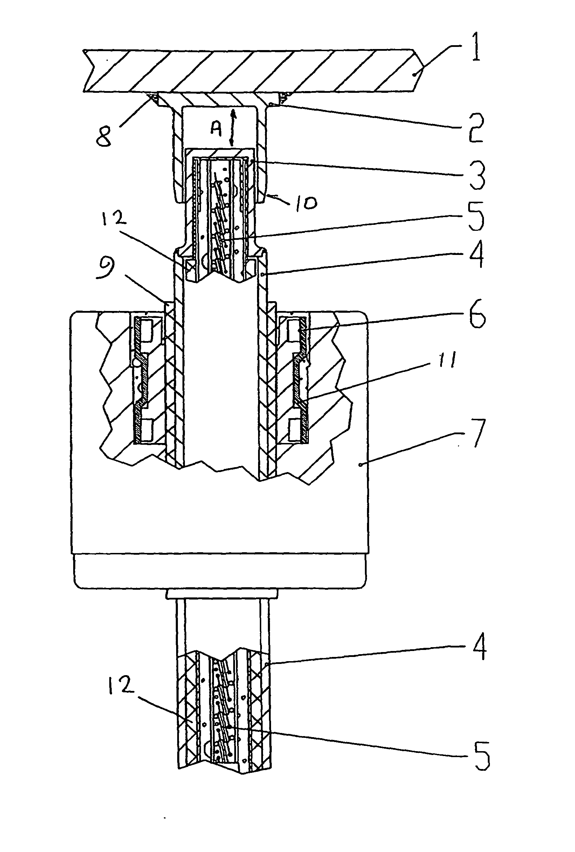

Es soll nun die Erfindung anhand eines Ausführungsbeispieles und der Zeichnung näher erläutert werden. Es zeigt die einzige Figur einen teilweise ausgebrochenen Schnitt durch eine Ausführungsform der Erfindung.

In der Figur bezeichnet 1 einen Teil der Decke eines (ansonsten nicht dargestellten) Flüssigkeitstankes, an welchem ein hohlzylindrischer Rohrstummel 2 mittels einer Schweissnaht 8 angeschweisst ist. Ein Führungsrohr 4 enthält einen Reedkontaktträger 5, der eine sich vertikal erstreckende Reihe von Reedkontakten trägt und in einem aus Kunststoff bestehenden Dämpfungsrohr 12 eingebettet ist, das mechanische Schockwellen abdämpft und die Reedkontakte vor Beschädigungen schützt. An seinem (nicht gezeigten) unteren Ende ist das Führungsrohr 4 auf konventionelle Weise, beispielsweise durch einen Montagebügel, im Tankinneren befestigt. Ausserdem verbindet (in nicht gezeigter Weise) eine dort flüssigkeitsdicht an das Führungsrohr und an die Tankwandung angeschlossene Rohrleitung das Innere des Führungsrohres mit dem Tankäusseren. Durch diese Rohrleitung treten von den Reedkontakten kommende elektrische Leiter aus dem Tank aus und gelangen zu einer elektrischen Schaltung, welche die von den Reedkontakten stammenden Signale auswertet. Die Signale entstehen durch Einwirkung von in einem längs des Führungsrohres 4 gleitenden Schwimmer 7 untergebrachten Magnete 6 auf die auf der Höhe des Schwimmers befindlichen Reedkontakte. Ein Magnetjoch 11 umfasst die Magnete 6 in bekannter Weise und wirkt als Abschirmelement, um das vom Schwimmer erzeugte äussere Streufeld auf ein Minimum zu reduzieren. Eine im Schwimmer angebrachte Führungsbuchse 9 aus Kunststoff passt mit vorgegebenem Spiel auf das Führungsrohr, um einen Abrieb des Schwimmers zu vermeiden und ein leichtes Gleiten des Schwimmers entlang des Rohres zu sichern. Wie dem Fachmann bekannt, können die durch das magnetisch erzeugte Öffnen und Schliessen der Reedkontakte erzeugten Signale ausgewertet werden, um mit guter Präzision und Zuverlässigkeit die Höhe des Schwimmers, und damit diejenige einer im Tank befindlichen Flüssigkeit zu bestimmen. Fallweise kann auch die Höhe der Grenzschicht zwischen zwei Flüssigkeiten mit verschiedenen spezifischen Gewichten bestimmt werden.

Das obere Ende des Führungsrohres ist verjüngt indem es durch eine auf das Führungsrohr 4 aufgeschweisste Kappe 3 gebildet wird, deren Aussendurchmesser kleiner als derjenige des Führungsrohres 4 ist. Der Innendurchmesser der Kappe ist gross genug, um Platz für den Reedkontaktträger 5 zu bieten, der sich bis an das Ende der Kappe 3 erstreckt, welche ihrerseits in den Rohrstummel 2 hineinragt und in radialer Richtung durch diesen gehalten wird. Falls im Betrieb mit grossen Verformungen des Tankes gerechnet werden muss, welche den Abstand zwischen dem an einer Tankwandung befestigten (nicht gezeigten), unteren Ende des Führungsrohres 4 und der Decke 1 des Tankes merklich verändern, erfolgt die Montage so, dass ein bestimmter Abstand A zwischen dem Ende der Kappe 3 und dem inneren Boden des Rohrstummels 2 bestehen bleibt. In der Figur wurde dieser Abstand der Klarheit halber relativ gross gewählt, was nicht immer der Fall zu sein braucht. Um die Sonde auszubauen genügt es, das Führungsrohr 4 an seinem (nicht gezeigten) unteren Ende aus seiner Halterung zu lösen, und es dann aus dem Rohrstummel 2 zu ziehen.

Wenn der Tank nahezu voll ist, steigt der Schwimmer 7 über seine in der Figur gezeigte Lage und kann bis an die Tankdecke 1 heranrücken, da die Muffe 9 bis über den Rohrstummel 2 gleiten kann, dessen Aussendurchmesser im wesentlichen gleich demjenigen des Führungsrohres 4 ist. Um mit Sicherheit ein Anecken beim Eintritt des Rohrstummels 2 in die Muffe 9 zu verhindern, weist diese an ihrem Ende eine Führungsfase 10 auf. Dadurch, dass sich der Reedkontaktträger 5 bis sehr nahe an die Tankdecke 1 erstreckt, und dass der Schwimmer 7 bis in unmittelbare Nähe dieser Decke gelangen kann, können dessen Magnete auch die äussersten, in Deckennähe befindlichen Reedkontakte betätigen, und daher den Flüssigkeitspegel sogar bei nahezu vollem Tank exakt anzeigen. Dadurch entfällt das sonst insbesondere bei Unterwasserfahrzeugen zu Trimmzwecken notwendige spezielle Ausmessen und Testen des oberhalb des letzten messbaren Pegels im Tank verbleibenden Totraumes.

Selbstverständlich kann die Erfindung auch dazu benutzt werden, um den letzten, in einem fast leeren Tank verbleibenden Flüssigkeitsrest genau zu messen. Dazu wird die in der Figur gezeigte Anlage an einer horizontalen Ebene gespiegelt. Der Rohrstummel ist dann am Boden des Tankes angebracht, das geschlossene Ende des Führungsrohres befindet sich zuunterst im Tank, und das andere Ende des Führungsrohres (an dem die elektrischen Leiter austreten), sitzt an beliebiger Stelle im Tankinneren. Zwei entgegengesetzt gerichtete Anlagen, deren Messbereiche sich im Inneren des Tankes überlappen, können verwendet werden, um eine von der unmittelbaren Nähe des Tankbodens bis zur unmittelbaren Nähe seiner Decke reichende, genaue Pegelbestimmung zu gewährleisten.

## Patentansprüche

1. Füllstandssonde, die Zur Verwendung in einem Fleissigkeitstank vorgesehen ist, mit einem, eine Reihe von magnetischen Fühlern enthaltenden Führungsrohr zum Führen eines darauf reitenden Schwimmers, der ein Magnetfeld zur Betätigung der Fühler erzeugt, **dadurch gekennzeichnet, dass** die Sonde ferner einem Rohrstummel umfasst, der zur Befestigung am der Decke oder am Boden des Tankes vorgesehen ist, und **dass** ein mindestens einen magnetischen Fühler enthaltendes Endstück (3) des Führungsrohres (4) in den Rohrstummel (2) hineinragt, um in radialer Richtung von diesem gehalten zu werden, wobei der äussere Querschnitt des Rohrstummels und derjenige des Führungsrohres so gewählt sind, dass sich der Schwimmer (7) weit genug über den Rohrstummel bewegen kann, um den mindestens einen Fühler zu betätigen.

2. Füllstandssonde nach Anspruch 1, **dadurch gekennzeichnet, dass** die äusseren Mantelflächen des Rohrstummels (2) und der grössten Länge des Führungsrohres (4) im wesentlichen Kreiszylinder mit demselben Durchmesser sind, wobei das Endstück (3) des Führungsrohres einen kleineren, in den Rohrstummel (2) passenden Durchmesser aufweist.

3. Füllstandssonde nach Anspruch 2, **dadurch gekennzeichnet, dass** die äussere Mantelfläche des Rohrstummels (2) an seinem freien Ende angefast ist (10), um das Darübergleiten des Schwimmers zu erleichtern.

4. Füllstandssonde nach Anspruch 2 oder 3, **dadurch gekennzeichnet, dass** das Endstück des Führungsrohres aus einer an den Rest dieses Rohres angeschweissten Kappe (3) besteht.

## Claims

1. Filling level probe which is provided for use in a fluid tank, comprising a guide tube for guiding a float riding thereon and containing a series of magnetic sensing devices, said float generating a magnetic field for actuation of the sensing devices, **characterised in that** the probe further comprises a tube stub provided for fixation on the ceiling or floor of the tank, respectively, that an end piece (3) containing at least one magnetic sensing device of the guide tube (4) extends into the tube stub (2), to be held in radial direction, wherein the outer width of the tube stub and the width of the guide tube are selected such that the float (7) can move far enough over the tube stub to actuate the at least one sensing device.

2. Filling level probe according to claim 1, **characterised in that** the outer generated surfaces of the tube stub (2) and of the greatest length of the guiding tube (4) are essentially circular cylinders with the same diameter, wherein the end piece (3) of the guiding tube has a smaller diameter fitting said tube stub (2).

3. Filling level probe according to claim 2 **characterised in that** the outer generated surface of the tube stub (2) is bevelled (10) on its free end to ease the sliding over of the float.

4. Filling level probe according to claim 2 or 3, **characterised in that** the end piece of the guiding tube consists of a cap (3) welded to the remainder of this tube.

## Revendications

1. Sonde de niveau destinée à être utilisée dans un réservoir de liquide et comportant un tube de guidage contenant un certain nombre de capteurs magnétiques et servant à guider un flotteur qui coulisse sur le tube et engendre un champ magnétique pour actionner les capteurs, **caractérisée par le fait que** la sonde comprend en outre un tronçon de tube qui est prévu pour une fixation au plafond ou au fond du réservoir, **par le fait qu'**une portion d'extrémité (3) du tube de guidage (4), contenant au moins un capteur magnétique, pénètre dans le tronçon de tube (2) pour être maintenue par celui-ci dans la direction radiale, la section extérieure du tronçon de tube et celle du tube de guidage étant choisies telles que le flotteur (7) puisse se déplacer d'une distance suffisante sur le tronçon de tube pour actionner le capteur, au nombre d'au moins un.

2. Sonde de niveau selon la revendication 1, **caractérisée par le fait que** les surfaces enveloppes extérieures du tronçon de tube (2) et de la plus grande longueur du tube de guidage (4) sont sensiblement des cylindres circulaires de même diamètre, la portion d'extrémité (3) du tube de guidage présentant un diamètre plus petit, s'ajustant dans le tronçon de tube (2).

3. Sonde de niveau selon la revendication 2, **caractérisée par le fait que** la surface enveloppe extérieure du tronçon de tube (2) est biseautée (10) à son extrémité libre, afin de faciliter le passage du flotteur.

4. Sonde de niveau selon la revendication 2 ou 3, **caractérisée par le fait que** la portion d'extrémité du tube de guidage est constituée d'un capuchon (3) soudé au reste dudit tube.
